(19) Europäisches Patentamt
European Patent Office
Office européen des brevets

(11) Publication number: 0 009 643
B1

(12) EUROPEAN PATENT SPECIFICATION

(45) Date of publication of patent specification: 28.12.83

(51) Int. Cl.³: C 08 G 79/02

(21) Application number: 79103276.6

(22) Date of filing: 05.09.79

(54) **Process for preparing polyphosphazene copolymers containing -OZ(OR)m-1 substituents bonded to the phosphorus atom.**

(30) Priority: 08.09.78 US 941106
08.09.78 US 941111
08.09.78 US 941115
08.09.78 US 941118

(43) Date of publication of application:
16.04.80 Bulletin 80/8

(45) Publication of the grant of the patent:
28.12.83 Bulletin 83/52

(84) Designated Contracting States:
BE DE FR GB IT NL SE

(56) References cited:
DE - A - 2 153 104
US - A - 3 194 787
US - A - 3 974 242

(73) Proprietor: THE FIRESTONE TIRE & RUBBER COMPANY
1200 Firestone Parkway
Akron, Ohio 44317 (US)

(72) Inventor: Hergenrother, William Lee
195 Dorchester Road
Akron, Ohio 44313 (US)
Inventor: Halasa, Adel Farhan
5040 Everett Road
Bath, Ohio 44210 (US)

(74) Representative: Kraus, Walter, Dr. et al,
Patentanwälte Dres. Kraus & Weisert
Irmgardstrasse 15
D-8000 München 71 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 009 643 B1

Courier Press, Leamington Spa, England.

# Process for preparing polyphosphazene copolymers containing $—O(OR)_{m-1}$ substituents bonded to the phosphorus atom

This invention relates to the production of polyphosphazene copolymers containing randomly distributed units represented by the formulas:

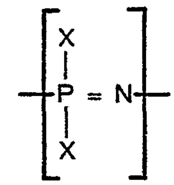 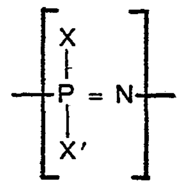 and 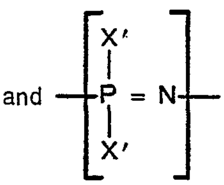

wherein X is a $—OZ(OR)_{m-1}$ radical in which Z is B+++, P+++, Si++++ or Ti++++, m is the valence of Z and R is a branched, straight chain or cyclic alkyl radical containing from 1 to 12 carbon atoms or mixtures thereof, and wherein X′ is selected from the group consisting of substituted and unsubstituted alkoxy, aryloxy, amino or mercapto groups and mixtures thereof.

Polyphosphazene polymers containing repeating

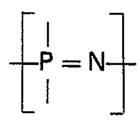

units in which various alkoxy, substituted alkoxy, aryloxy and substituted aryloxy groups are attached to the phosphorus atom and their method of preparation are described in the prior art as illustrated in the publication "Phosphorus-Nitrogen Compounds", Academic Press, New York, New York 1972 by H. R. Allcock and "Poly(Organophosphazenes)", Chemtech, September 19, 1975 by H. R. Allcock and US—A—3,515,688; 3,702,833; and 3,856,712.

DE—A—2,153,104 (US—A—3,702,833) discloses polyphosphazene terpolymers which contain $—OSi(OR')_2R''$ groups. These publications describe a complicated three-step process for forming the terpolymer which involves first hydrolyzing a polydichlorophosphazene to form a $[NPCl_2—NP(OH_2)]_n$ copolymer, then reacting that copolymer with a mixture of sodium alkoxide and then reacting the resultant product with a $HOSi(OR)_3$ compound. US—A—3,974,242 describes a process for producing fire retardant phosphonitrilate polymers by reacting phosphonitrilic halide with a hydroxyl compound such as an aliphatic or aromatic alcohol in the presence of an acid acceptor.

The object of the present invention is to avoid the complicated three-step process of DE—A—2,153,104 and to provide a simple one-step process for the production of polyphosphazene copolymers containing the above mentioned units.

According to the present invention, this object is achieved by a method which is characterized by reacting a poly(dichlorophosphazene) polymer having the formula $—(NPCl_2)_n—$, wherein n is from 20 to 50,000, with a mixture consisting of a $Z(OR)_m$ compound where Z, m and R are as defined above and a substituted or unsubstituted aliphatic or aromatic alcohol, an amino compound or a mercapto compound in the presence of a tertiary amine.

The present invention is based upon overcoming the technical prejudice that a complicated three-step process as described in DE—A—2,153,104 is necessary to prepare the above mentioned polyphosphazene copolymers. According to the invention, it has been surprisingly found that the same polyphosphazene copolymers can be produced by a simple one-step process. US—A—3,974,242 describes a one-step process too, but there are substantial differences between the hydroxyl compounds used according to this publication and the hydroxyl group containing compounds which are used in the present process. Thus, the one-step process of the present invention is not suggested by this prior publication.

The copolymers produced by the process of the invention contain randomly distributed repeating units represented by the formulas:

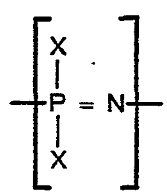 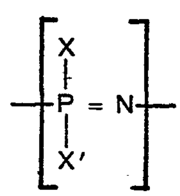 and 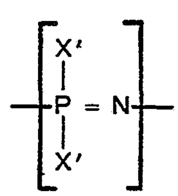

wherein X is a $—OZ(OR)_{m-1}$ radical in which Z is $B^{+++}$, $P^{+++}$, $Si^{++++}$, or $Ti^{++++}$, m is the valence of Z, R is a branched, straight chain or cyclic alkyl group containing from 1 to 12 carbon atoms and wherein X′ is

selected from the group consisting of substituted or unsubstituted alkoxy, aryloxy, amino and mercapto radicals, and wherein the polymer contains from 20 to 50,000 of such units.

X substituent radicals represented by the $—OZ(OR)_{m-1}$ radical are $—OB(OR)_2$, $—OP(OR)_2$, $—OSi(OR)_3$ and $—OTi(OR)_3$ wherein R is as defined above.

In the copolymer units represented by the above formulas, all X substituent groups may be the same or they may be mixed and all X′ substituent groups may be the same or mixed. In the mixtures, the X substituent groups may be mixtures of different $—OZ(OR)_{m-1}$ groups and the X′ substituent groups may be mixtures of different alkoxy, aryloxy, amino or mercapto groups.

The specific proportion of X to X′ substituent groups incorporated in the copolymers may vary considerably depending upon the particular end use for which the copolymer is intended, chemical and physical properties desired, and the degree of crosslinking desired. In general, the copolymers may contain from 0.1 to 55 mole percent of the X substituent and from 45 to 99.9 mole percent of the X′ substituent. The preferred range is from 0.5 to 20 mole percent of the X substituent and from 80 to 99.5 mole percent of the X′ substituent. For applications such as moldings, coatings, foams and the like, the copolymer should contain at least ten (10) mole percent by weight of the X substituent.

The general reaction of the $Z(OR)_m$ compound with the poly(dichlorophosphazene) in the presence of the tertiary amine is set out below; the remainder of the reaction with a substituted or unsubstituted aliphatic or aromatic alcohol, an amino compound or mercaptan compound is defined in the prior art.

$$Z(OR)_m + (NPCl_2)_n + R'_3N \rightarrow R\overset{\oplus}{N}R'_3\ Cl^{\ominus} + [NP[OZ(OR)_{m-1}]\ [Cl]].$$

Illustrative of reactions using specific $Z(OR)_m$ compounds to form copolymers of the invention are the following:

$$B(OR)_3 + (NPCl_2)_n + R'_3N \rightarrow R\overset{\oplus}{N}R'_3\ Cl^{\ominus} + [NP[OB(OR)_2]\ [Cl]]_n$$

$$P(OR)_3 + (NPCl_2)_n + R'_3N \rightarrow R\overset{\oplus}{N}R'_3\ Cl^{\ominus} + [NP[OP(OR)_2]\ [Cl]]_n$$

$$Si(OR)_4 + (NPCl_2)_n + R'_3N \rightarrow R\overset{\oplus}{N}R'_3\ Cl^{\ominus} + [NP[OSi(OR)_3]\ [Cl]]_n$$

$$Ti(OR)_4 + (NPCl_2)_n + R'_3N \rightarrow R\overset{\oplus}{N}R'_3\ Cl^{\ominus} + [NP[OTi(OR)_3\ [Cl]]_n$$

The above reactions are illustrative only and shown only one chlorine substitution. It is understood that the other chlorine atom may be replaced by one of the other substituent groups (e.g., alkoxy, aryloxy, etc.) defined above and hereinafter.

The copolymers can be used to prepare films and may be utilized in applications such as moldings and coatings. They also exhibit a crosslinking reaction at room temperature in the presence of water.

I. The Poly(Dichlorophosphazene) Polymer

Poly(dichlorophosphazene) polymers which are employed as starting materials in the process of this invention are well known in the art as illustrated in U.S.—A—3,370,020; 4,005,171; and 4,055,520 and the aforementioned publications of H. R. Allcock.

These polymers have the general formula $—(NPCl_2)_n—$, in which n may range from 20 to 50,000 or more. As described in the aforementioned references, the polymers are in general prepared by the thermal polymerization of cyclic oligomers having the formula $(NPCl_2)_n—$, in which n is an integer of from 3 to 7, with the cyclic trimer and tetramer often comprising up to 90% of the oligomers.

The specific conditions of temperature, pressure and time employed in the thermal polymerization of the cyclic oligomers can vary considerably depending on whether or not the polymerization is catalyzed. Thus, temperatures may range from about 130°C to about 300°C, pressures may range from a vacuum of less than 0.13 mbar ($10^{-1}$ Torr) to superatmospheric and times may range from 30 minutes to about 48 hours.

A preferred process for preparing the poly(dichlorophosphazene) polymers used in the process of this invention is described in the aforementioned U.S.—A—4,005,171.

II. The $—OZ(OR)_{m-1}$ Substituent (i.e., The X Substituent)

As indicated, the $—OZ(OR)_{m-1}$ substituent is a radical in which Z is $B^{+++}$, $P^{+++}$, $Si^{++++}$, or $Ti^{++++}$, m is the valence of Z and R is a branched, straight chain or cyclic alkyl group containing 1 to 12 carbon atoms. As indicated above, radicals represented by the $—OZ(OR)_{m-1}$ radical are $—OB(OR)_2$, $—OP(OR)_2$, $—OSi(OR)_3$ and $—OTi(OR)_3$. These radicals are derived from alkyl borates, alkylphosphites, tetraalkyl orthosilicates, and tetraalkyl titanates.

The alkyl borates which are employed in forming the copolymers produced by the process of the invention are the trialkyl borates of the general formula $B(OR)_3$ where R is a branched, straight chain or cyclic alkyl radical and contain from 1 to 12 carbon atoms. The alkyl groups in the borate may be the same or different. Illustrative examples of alkyl borates which may be suitably employed are trimethyl borate, triethyl borate, tripropyl borate and the like, tris-2-ethyl hexyl borate and the like, and tris-cyclohexyl borate and the like. It is known in the art that trimethyl borate has a different structural configuration than the rest of the trialkyl borates (see e.g., "Organoboron Chemistry", Vol. 1, "Boron-Oxygen and Boron-Sulfur Compounds", published in 1964 by John Wiley & Sons, Inc.) and thus, a much higher reactivity than the higher borates. In view of this known situation it is necessary to use a special sequence when using trimethyl borate (cf. example 2) whereas the higher borates may be used in the mixture of the reactants. In view of the known high reactivity of trimethyl borate (cf. "Organoboron Chemistry" loc. cit.) it is obvious for the skilled polymer chemist to modify the general process where trimethyl borate is used as one of the starting compounds.

Alkylphosphites which are employed in forming the copolymers are trialkylphosphites having the general formula $P(OR)_3$ where R is a branched, straight chain or cyclic alkyl radical containing from 1 to 12 carbon atoms. The alkyl radicals in the phosphite may be the same or different. Illustrative examples of alkylphosphites which may be suitably employed are trimethyl phosphite, triethyl phosphite, and tripropyl phosphite.

Tetraalkyl orthosilicates which are employed in forming the copolymers of the invention are the tetraalkyl orthosilicates of the general formula $Si(OR)_4$ where R is a branched, straight chain or cyclic alkyl radical with from 1 to 12 carbon atoms. The alkyl radicals in the silicate may be the same or different. Illustrative examples of the tetraalkyl orthosilicates which may be suitably employed are tetraethyl orthosilicate, tetramethyl orthosilicate, tetrabutyl orthosilicate, and tetraoctyl orthosilicate. A preferred tetraalkyl orthosilicate is tetraethyl orthosilicate.

Tetraalkyl titanates which are employed in forming the copolymers are the tetraalkyl titanates of the general formula $Ti(OR)_4$ where R is a branched, straight chain or cyclic alkyl radical with from 1 to 12 carbon atoms. The alkyl radicals in the titanate may be the same or different. Illustrative examples of the tetraalkyl titanates which may be suitably employed are tetraethyl titanate, tetramethyl titanate, tetrabutyl titanate, and tetraoctyl titanate. A preferred tetraalkyl titanate is tetrabutyl titanate.

III. The Alkoxy, Aryloxy, Amino and Mercapto Substituents (i.e., the X′ Substituents)

As indicated heretofore, the polyphosphazene copolymers produced by the process of the invention in addition to the $-OZ(OR)_{m-1}$ substituent group contain substituted or unsubstituted alkoxy, aryloxy, amino or mercapto groups.

The alkoxy groups (substituted or unsubstituted) may be derived from aliphatic alcohols having from 1 to 20 carbon atoms such as methanol, ethanol, propanol, isopropanol, n-butanol, sec-butanol, and dodecanol; fluoroalcohols, especially those represented by the formula $Y(CF_2)_nCH_2OH$ in which Y is hydrogen or fluorine and n is an integer from 1 to 10 as illustrated by trifluoroethanol, 2,2,3,3,3-pentafluoropropanol, 2,2,3,3,4,4,4-heptafluorobutanol; 2,2,3,3-tetrafluoropropanol, 2,2,3,3,4,4,5,5-octafluoropentanol, and 2,2,3,3,4,4,5,5,6,6,7,7-dodecafluoroheptanol. In instances where it is desired to incorporate mixed X′ substituent groups in the copolymers, mixtures of the foregoing alcohols are employed.

The aryloxy groups (substituted or unsubstituted) may be derived from phenols including among others phenol; alkylphenols such as cresols, xylenols, p-, o-, and m- ethyl and propyl phenols; halogen-substituted phenols such as p-, o-, and m-chloro and bromo phenols and di- or tri-halogen substituted phenols; and alkoxy-substituted phenols such as 4-methoxyphenol, and 4-(n-butoxy) phenol.

Mixtures of the foregoing phenols may also be employed.

The amino groups may be derived from any of the amino compounds heretofore employed in the polyphosphazene polymer art. Thus, the amino groups may be derived from aliphatic primary and secondary amines such as methylamine, ethylamine, dimethylamine, and ethylmethylamine and aromatic amines such as those described in U.S.—A—4,042,561, as illustrated by aniline, halogen-substituted anilines, alkyl-substituted anilines, and alkoxy-substituted anilines.

The mercapto groups may be derived from any of the mercaptan compounds heretofore employed in the polyphosphazene polymer art. Thus, for example, the mercaptan compounds described in U.S.—A—3,974,242, may be utilized. Representative of suitable mercaptan compounds as described in the aforementioned patent are methyl mercaptan and its homologs ethyl, propyl, butyl, aryl and hexyl mercaptans, thiophenol, thionaphthols, benzyl mercaptan, and cyclohexyl mercaptan.

Preferred substituent groups represented by X′ are alkoxy, especially fluoroalkoxy, and aryloxy, especially substituted phenols such as halogen-substituted phenols.

IV. The Tertiary Amine

The use of the tertiary amine minimizes undesirable side reactions and at the same time acts as an effective acid scavenger.

Tertiary amines which may be employed in preparing the polymers of the invention are those represented by the general structure:

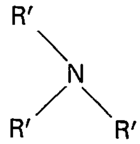

wherein R′ may be the same or different and each may be alkyl containing from 1 to 8 carbon atoms. Thus, for example, the tertiary amine may be a trialkyl amine such as trimethylamine, triethylamine, triisopropylamine, tri-n-propylamine, tri-isobutylamine, and tri-n-butylamine.

In addition, tertiary amines such as pyridine, N,N,N′,N′-tetramethylethylene diamine (TMEDA), dipipyridyl ethane, 1,4 diaza bicyclo (2.2.2) octaine (DABCO), N-methyl pyrrole and N-methyl morpholine can also be utilized.

The preferred tertiary amines for use in preparing the polymers of the invention are triethylamine, N,N,N′,N′-tetramethylethylene diamine and pyridine.

As indicated above, the copolymers of the present invention are prepared by reacting the poly(dichlorophosphazene) polymer and the substituent mixture of the $Z(OR)_m$ compound and a substituted or unsubstituted aliphatic alcohol, aromatic alcohol, amino compound or mercaptan compound in the presence of a tertiary amine.

The specific reaction conditions and proportion of ingredients employed in preparing these copolymers can vary somewhat depending on factors such as the reactivity of the specific substituent mixtures utilized, the particular tertiary amine employed, and the degree of substitution desired in the finished polymer. In general, reaction temperatures may range from about 25°C to about 200°C and times may range from 3 hours up to 7 days; lower temperatures necessitating longer reaction times and higher temperatures allowing shorter reaction times. These conditions are, of course, utilized in order to obtain the most complete reaction possible, i.e., in order to insure substantially complete conversion of the chlorine atoms in the polymer to the corresponding esters of the substituent mixture.

The above reaction is ordinarily carried out in the presence of a solvent. The solvent employed in the reaction should be a solvent for the poly(dichlorophosphazene) polymer, the substituent mixture and the tertiary amine. Examples of suitable solvents which may be employed include diglyme, triglyme, tetraglyme, toluene, xylene, cyclohexane, chloroform, dioxane, dioxalene, methylene chloride, tetrachloroethane, and tetrahydrofuran. The amount of solvent employed is not critical and any amount sufficient to solubilize the reaction mixture materials can be employed.

In addition, the materials in the reaction zone should be reasonably free of water, most preferably containing 0.01 percent by weight of water or less. The avoidance of water in the reaction system is necessary in order to inhibit the reaction of the available chlorine atoms in the chloropolymer therewith. Also the presence of water yields crosslinks with the X substituent groups of the copolymers prepared by this invention at room temperature and therefore, the absence of water is vital until this reaction is desired. Thus, for example, when the X substituent group of the copolymer is derived from an alkyl borate [i.e., $B(OR)_3$], the alkyl groups in the borate linkage in the copolymer will react with water to yield BOH on the copolymer. The BOH site will react with other borate linkages to yield B—O—B, the crosslinked structure. Copolymers containing X substituents derived from alkyl phosphites, tetraalkyl orthosilicates and tetraalkyl titanates react in a similar manner with water. Thus, the alkyl groups in the phosphite linkages react with water (hydrolyze) to yield POH groups which subsequently react with additional POR or POH to give P—O—P crosslinks; the alkyl groups in the silicate linkages react with water to yield SiOH groups which subsequently react with additional SiOR or SiOH to give Si—O—Si crosslinks; and the alkyl groups in the titanate linkages react with water to yield TiOH groups which subsequently react with additional TiOR or TiOH to give Ti—O—Ti crosslinks.

This reaction occurs at room temperature. Its rate is controlled by the amount of X substituent and water present.

The resulting crosslinked product is readily realized and due to its highly inorganic character, yields improved flame retardant, heat stability and solvent resistance properties.

In general, the amount of the substituent mixture employed in the process should be at least molecularly equivalent to the number of available chlorine atoms in the polymer mixture. However, if desired, an excess of such compounds may be employed in order to insure substantially complete reaction of all the available chlorine atoms.

The following examples are submitted for the purpose of further illustrating the nature of the present invention.

Parts and percentages referred to in the examples are by weight unless otherwise indicated.

The following examples (i.e., 1—3) illustrate copolymers in which the X substituent is $—OB(OR)_2$.

## Example 1

Preparation of 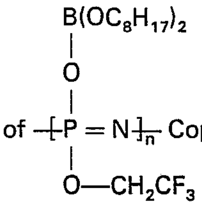 Copolymer

To a 300 ml (10 ounce) beverage bottle was charged 13.13 g. (44 millimoles) tris-2-ethyl hexyl borate, $B(OC_8H_{17})_3$, 100 ml of dry tetrahydrofuran (hereinafter THF), 12.3 ml (88 millimoles) of triethylamine, 3.2 ml (44 millimoles) of trifluoroethanol, and 30.3 g. of a 15.3% poly(dichlorophosphazene) polymer in THF (4.64 g., 40.0 millimoles) having a degree of polymerization of about 2600. After 20 hrs. in a 120°C rotary bath, the reaction was cooled and the triethylamine salt of 2-ethyl hexyl chloride and triethylamine hydrochlorate settled out of solution and no PCL bonds could be detected by Infrared spectroscopy.

A film of this copolymer was cast on a glass plate which was soluble in THF after two weeks exposure to air. After six weeks exposure to air the film was crosslinked as evidenced by its insolubility in THF.

A coagulation in hexane gave 2.94 g. of a tan rubbery material which became hard on standing. An analysis of the crosslinked product gave:

| C | H | N | P | Cl |
|---|---|---|---|---|
| 28.63% | 5.04% | 8.65% | 14.09% | 3.26% |

It was calculated that this product contained 12.67% triethylamine hydrochloride and 21.42% hydrolysed chloropolymer.

The solid polymer when pressed at 175°C under a pressure of 137.5 bar (2000 psi) formed a smooth, clear continuous film.

## Example 2

Preparation of 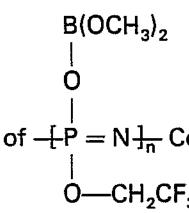 Copolymer

The experiment of Example 1 was repeated substituting 4.58 g. (44 millimoles) of trimethyl borate, $B(OCH_3)_3$ for the tris-2-ethyl hexyl borate. The other ingredients and conditions were identical. After methanol washing 3.5 g. of insoluble products was realized.

In this example, the trifluoroethanol was added prior to the trimethyl borate. This was necessary as the borate would react too fast and crosslinkage would occur in the reaction vessel with a resulting unusable product.

## Example 3

Preparation of 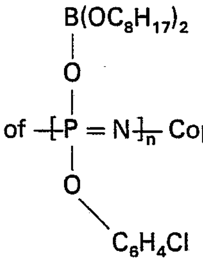 Copolymer

To a 300 ml (10 ounce) beverage bottle was charged 6.57 g. (22 millimoles) tris-2-ethyl hex borate, $B(OC_8H_{17})_3$, 100 ml of dry alcohol free chloroform, 12.3 ml (88 millimoles) of triethylamine, 8.49 g. (66 millimoles) of p-chlorophenol, and 42.5 g. of a 10.93% poly(dichlorophosphazene) polymer in cyclohexane (40.1 millimoles) having a degree of polymerization of about 2600. After 20 h in a

120°C oven, a clear, yellow viscous resulted. After cooling to 25°C, triethylamine hydrochloride crystalized out. Infrared spectroscopy showed no PCL band at 600 $cm^{-1}$ and strong, new bands at 558, 540 and 480 $cm^{-1}$.

The solution was cast and, after drying two days in air, a rubbery, tetrahydrofuran insoluble, film resulted.

The following examples (i.e., 4—5) illustrate copolymers produced by the process of this invention in which the X substituent is $—OP(OR)_2$.

Example 4

Preparation of 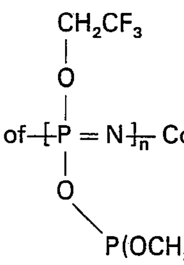 Copolymer

To a 300 ml (10 ounce) beverage bottle was charged 5.2 ml (44 millimoles) of trimethyl phosphite, $P(OCH_3)_3$, 100 ml of dry tetrahydrofuran (hereinafter THF), 12.3 ml (88 millimoles) of triethylamine, 3.2 ml (44 millimoles) of trifluoroethanol, and 35.9 g. of a 12.85% THF solution of poly(dichlorophosphazene) (39.9 millimoles) having a degree of polymerization of about 2600. After 68 h at 80°C in a rotary bath and cooling, no PCL bonds could be detected by Infrared spectroscopy.

The THF insoluble chloride salts settled out as needle crystals. The remaining solution was evaporated to yield a hard, brittle film that was insoluble in THF.

An analysis of the polymeric product showed the following results:

| | C | H | N | P | Cl |
|---|---|---|---|---|---|
| Actual (%) | 18.60 | 2.12 | 8.13 | 19.01 | 2.54 |

From this the composition of the film was assumed to be 19.6% hydrolyzed chloropolymer, 9.0% triethylamine methylchloride, 59.0% trifluoroethoxy derivative and 10.4% dimethyl phosphite derivative.

This composition has a calculated analysis of:

| | C | H | N | P | Cl |
|---|---|---|---|---|---|
| Calculated (%) | 18.56 | 3.04 | 8.26 | 18.89 | 2.11 |

Example 5

Preparation of 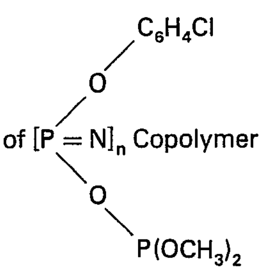 Copolymer

To a 300 ml (10 ounce) beverage bottle was charged 2.60 ml (22 millimoles) of trimethyl phosphite, $P(OCH_3)_3$, 100 ml of dry THF, 8.49 g. (66 millimoles) of p-chlorophenol, 12.3 ml (88 millimoles) of triethylamine and 42.7 g. (40.3 millimoles) of a 10.93% cyclohexane solution of poly(dichlorophosphazene) having a degree of polymerization of about 26000. Heating in an oven for 20 h. at 120°C gave a colorless solution with insoluble amine salts. Infrared spectroscopy showed no PCl band at 600 $cm^{-1}$ and new bands at 543, 512 and 492 $cm^{-1}$.

Casting a film gave a white rubbery film that was insoluble in THF after standing in air after 2 days.

The following examples (i.e., 6—7) illustrate the production of copolymers in which the X substituent is $—OSi(OR)_3$.

Example 6

Preparation of $-[OSi(OC_2H_5)_3)_2PN]-$, $-[(OSi(OC_2H_5)_3)(CF_3CH_2O)PN]-$, $-[(CF_3CH_2O)_2PN]-$ Copolymer

To a 300 ml (10 ounce) beverage bottle was charged 9.17 g. (44 millimoles; 9.82 ml) of tetraethyl orthosilicate, $Si(OC_2H_5)_4$ 100 ml of dry tetrahydrofuran (hereinafter THF), 12.3 ml (88 millimoles) of triethylamine, 3.2 ml (44 millimoles) of trifluoroethanol, and 36.0 g. of a 12.85% THF solution of poly(dichlorophosphazene) 4.626 g. (39.9 millimoles having a degree of polymerization of about 2600. After 20 h in a 80°C rotary bath and cooling, no PCl bonds could be detected by Infrared spectroscopy.

The THF insoluble chloride salts (triethylamine hydrochloride and tetraethylamine chloride) settled out as crystals. The remaining solution was evaporated to yield a hard, brittle film that was insoluble in THF.

An analysis of the polymeric product showed the following results:

| | C | H | N | P | Cl |
|---|---|---|---|---|---|
| Calculated (%) | 18.33 | 2.22 | 7.08 | 15.65 | 2.54 |
| Actual (%) | 18.33 | 2.22 | 8.16 | 15.16 | 2.54 |

The calculated results were based on 72.3% $[(CF_3CH_2O)_2PN]_n$, 4.20% $[Cl_2PN]_n$, 21.4% $[(OSi(OC_2H_5)_3)_2PN]_n$ and 6.9% $[(HO_2)PN]_n$ which were assumed products although it is recognized that the actual products represent mixtures thereof, specifically those identified above.

The mole percent for the above assumed products from trifluoroethanol and tetraethyl orthosilicate were:

| Weight % | Mole % | |
|---|---|---|
| 21.4 | 15.7 | $[(OSi(OC_2H_5)_3)_2PN]_x$ |
| 72.3 | 59.6 | $[(CF_3CH_2O)_2PN]_x$ |
| 4.2 | 7.3 | $(Cl_2PN)_x$ |
| 6.9 | 17.5 | $[(HO)_2PN]_x$ |

Example 7

Preparation of $-[OSi(OC_2H_5)_3)_2PN]-$, $-[(OSi(OC_2H_5)_3)(ClC_6H_4O)PN]-$, $-[(ClC_6H_4O)_2PN]-$ Copolymer

To a 300 ml (10 ounce) beverage bottle was charged 9.17 g. (44 millimoles; 9.82 ml) of tetraethyl orthosilicate, $Si(OC_2H_5)_4$ 100 ml of dry, alcohol free chloroform, 12.3 ml (88 millimoles) of triethylamine, 5.66 g. (44 millimoles) of p-chlorophenol, and 55.6 g. of 8.35% cyclohexane solution of poly(dichlorophosphazene), (40.1 millimoles) having a degree of polymerization of about 2600. After 20 h in a 120°C oven, a viscous yellow solution with crystals of amino salts was obtained. Infrared spectroscopy showed no PCL bonds at 600 $cm^{-1}$ and strong, new bonds at 568, 540 and 478 $cm^{-1}$.

A solution was cast and, after drying three days in the air, a rubbery, tetrahydrofuran insoluble, film resulted.

The following examples (i.e., 8—9) illustrate the production of copolymers in which the X substituent is $-OTi(OR)_3$.

Example 8

Preparation of $-[NP(OCH_2CF_3)(OTi(OC_4H_9)_3]-$ Copolymer

To a 300 ml (10 ounce) beverage bottle was charged 14.97 g. (44 millimoles; 15.06 ml) of tetrabutyl titanate, $Ti(OC_4H_9)_4$, 100 ml of dry tetrahydrofuran (hereinafter THF), 12.3 ml (88 millimoles) of triethylamine, 3.2 ml (44 millimoles) of trifluoroethanol, and 35.9 g. of a 12.85% THF solution of poly(dichlorophosphazene) (39.9 millimoles) having a degree of polymerization of about 2600. After 68 h at 80°C in a rotary bath and cooling, no PCL bonds could be detected by Infrared spectroscopy.

The THF insoluble chloride salts settled out as needle crystals. The remaining solution was evaporated to yield a hard, brittle film that was insoluble in THF.

Example 9

Preparation of $[NP(OH_4C_6\text{-}Cl\text{-}p)(OTi(OC_4H_9)_3)$ Copolymer

To a 300 ml (10 ounce) beverage bottle was charged 7.53 ml (22 millimoles) of tetrabutyl titanate, $Ti(OC_4H_9)_4$, 100 ml of alcohol free chloroform, 8.49 g. (88 millimoles) of p-chlorophenol, 12.3 ml (88 millimoles) of triethylamine and 42.3 g. of a 10.93% cyclohexane solution of poly(dichlorophosphazene) (39.9 millimoles) having a degree of polymerization of about 2600. Heating the mixture for 20 h at 120°C in an oven produced a solution with insoluble amine salts. I.R. showed no P-Cl bonds at 600 $cm^{-1}$ and new bonds at 500 + 500 $cm^{-1}$.

A film cast from the solution was rubbery in nature and was insoluble in THF after standing for 2 days in air. Elemental analysis of the film showed the following results:

| | C | H | N | P | Cl |
|---|---|---|---|---|---|
| Actual (%) | 38.55 | 5.78 | 5.01 | 6.37 | 20.05 |
| Calculated* (%) | 38.59 | 5.14 | 5.86 | 6.26 | 19.93 |

* Based on a composition consisting of 29.8 percent triethylemine, 3.8 percent chloropolymer, 42.1 percent p-chlorophenol derivative and 10.7 percent titanate derivative.

**Claims**

1. A method of preparing polyphosphazene copolymers containing randomly distributed units represented by the formulas:

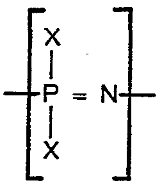 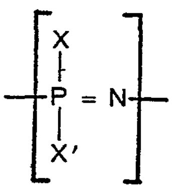 and 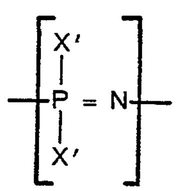

wherein X is a —$OZ(OR)_{m-1}$ radical in which Z is B+++, P+++, Si++++ or Ti++++, m is the valence of Z and R is a branched, straight chain or cyclic alkyl radical containing from 1 to 12 carbon atoms or mixtures thereof, and wherein X′ is selected from the group consisting of substituted and unsubstituted alkoxy, aryloxy, amino or mercapto groups and mixtures thereof; characterized by reacting a poly(dichlorophosphazene) polymer having the formula —$(NPCl_2)_n$—, wherein n is from 20 to 50,000, with a mixture consisting of a $Z(OR)_m$ compound where Z, m and R are as defined above and a substituted or unsubstituted aliphatic or aromatic alcohol, an amino compound or a mercapto compound in the presence of a tertiary amine.

2. The method of claim 1 wherein said $Z(OR)_m$ compound is a trialkyl borate represented by the formula $B(Or)_3$.

3. The method of claim 1 wherein said mixture consists of a trialkyl borate and an aliphatic or aromatic alcohol.

4. The method of claim 1 where said mixture consists of tris-2-ethyl hexyl borate and trifluoroethanol.

5. The method of claim 1 wherein said mixture consists of trimethyl borate and trifluoroethanol.

6. The method of claim 1 wherein said mixture consists of tris-2-ethyl hexyl borate and p-chlorophenol.

7. The method of claim 1 wherein said $Z(OR)_m$ compound is a trialkyl phosphite represented by the formula $P(OR)_3$.

8. The method of claim 1 wherein said mixture consists of a trialkyl phosphite and an aliphatic or aromatic alcohol.

9. The method of claim 8 wherein said mixture consists of trimethyl phosphite and trifluoroethanol.

10. The method of claim 8 wherein said mixture consists of trimethyl phosphite and p-chlorophenol.

11. The method of claim 1 wherein said $Z(OR)_m$ compound is a tetraalkyl orthosilicate represented by the formula $Si(OR)_4$.

12. The method of claim 1 wherein said mixture consists of a tetraalkyl orthosilicate and an aliphatic or aromatic alcohol.

13. The method of claim 12 wherein said mixture consists of tetraethyl orthosilicate and trifluoroethanol.

14. The method of claim 12 wherein said mixture consists of tetraethyl orthosilicate and p-chlorophenol.

15. The method of claim 1 wherein said $Z(OR)_m$ compound is a tetraalkyl titanate represented by the formula $Ti(OR)_4$.

16. The method of claim 1 wherein said mixture consists of a tetraalkyl titanate and an aliphatic or aromatic alcohol.

17. The method of claim 1 wherein said mixture consists of tetrabutyl titanate and trifluoroethanol.

18. The method of claim 1 wherein said mixture consists of tetrabutyl titanate and p-chlorophenol.

19. The method of claim 1 wherein said tertiary amine is triethylamine.

**Patentansprüche**

1. Verfahren zur Herstellung von Polyphosphazencopolymeren, enthaltend beliebig verteilte Einheiten der Formeln

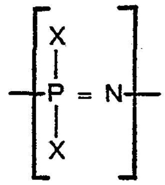 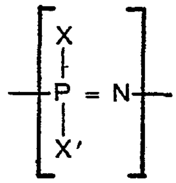 und 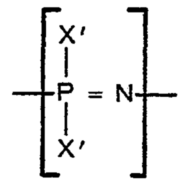

worin X für ein $-OZ(OR)_{m-1}$-Radikal steht, wobei Z für B+++, P+++, Si++++ oder Ti++++ steht, m die Wertigkeit von Z ist und R ein verzweigtes, geradkettiges oder cyclisches Alkylradikal mit 1 bis 12 Kohlenstoffatomen oder ein Gemisch davon ist, und wobei X' aus der Gruppe, bestehend aus substituierten und unsubstituierten Alkoxy-, Aryloxy-, Amino- oder Mercaptogruppen und Gemischen davon, ausgewählt ist, dadurch gekennzeichnet, daß man ein Poly(dichlorphosphazen)-Polymeres mit der Formel $-(NPCl_2)_n-$, in der n 20 bis 50 000 ist, mit einem Gemisch, bestehend aus einer $Z(OR)_m$-Verbindung, wobei Z, m und R die obigen Definitionen haben, und einem substituierten oder unsubstituierten aliphatischen oder aromatischen Alkohol, einer Aminoverbindung oder einer Mercaptoverbindung in Gegenwart eines tertiären Amins umsetzt.

2. Verfahren nach Anspruch 1, dadurch gekennzeichnet, daß die $Z(OR)_m$-Verbindung ein Trialkylborat der Formel $B(OR)_3$ ist.

3. Verfahren nach Anspruch 1, dadurch gekennzeichnet, daß das Gemisch aus einem Trialkylborat und einem aliphatischen oder aromatischen Alkohol besteht.

4. Verfahren nach Anspruch 1, dadurch gekennzeichnet, daß das Gemisch aus Tris-2-ethylhexylborat und Trifluorethanol besteht.

5. Verfahren nach Anspruch 1, dadurch gekennzeichnet, daß das Gemisch aus Trimethylborat und Trifluorethanol besteht.

6. Verfahren nach Anspruch 1, dadurch gekennzeichnet, daß das Gemisch aus Tris-2-ethylhexylborat und p-Chlorphenol besteht.

7. Verfahren nach Anspruch 1, dadurch gekennzeichnet, daß die $Z(OR)_m$-Verbindung ein Trialkylphosphit der Formel $P(OR)_3$ ist.

8. Verfahren nach Anspruch 1, dadurch gekennzeichnet, daß das Gemisch aus einem Trialkylphosphit und einem aliphatischen oder aromatischen Alkohol besteht.

9. Verfahren nach Anspruch 8, dadurch gekennzeichnet, daß das Gemisch aus Trimethylphosphit und Trifluorethanol besteht.

10. Verfahren nach Anspruch 8, dadurch gekennzeichnet, daß das Gemisch aus Trimethylphosphit und p-Chlorphenol besteht.

11. Verfahren nach Anspruch 1, dadurch gekennzeichnet, daß die $Z(OR)_m$-Verbindung ein Tetraalkylorthosilicat der Formel $Si(OR)_4$ ist.

12. Verfahren nach Anspruch 1, dadurch gekennzeichnet, daß das Gemisch aus einem Tetraalkylorthosilicat und einem aliphatischen oder aromatischen Alkohol besteht.

13. Verfahren nach Anspruch 12, dadurch gekennzeichnet, daß das Gemisch aus Tetraethylorthosilicat und Trifluorethanol besteht.

14. Verfahren nach Anspruch 12, dadurch gekennzeichnet, daß das Gemisch aus Tetraethylorthosilicat und p-Chlorphenol besteht.

15. Verfahren nach Anspruch 1, dadurch gekennzeichnet, daß die $Z(OR)_m$-Verbindung ein Tetraalkyltitanat der Formel $Ti(OR)_4$ ist.

16. Verfahren nach Anspruch 1, dadurch gekennzeichnet, daß das Gemisch aus Tetraalkyltitanat und einem aliphatischen oder aromatischen Alkohol besteht.

17. Verfahren nach Anspruch 1, dadurch gekennzeichnet, daß das Gemisch aus Tetrabutyltitanat und Trifluorethanol besteht.

18. Verfahren nach Anspruch 1, dadurch gekennzeichnet, daß das Gemisch aus Tetrabutyltitanat und p-Chlorphenol besteht.

19. Verfahren nach Anspruch 1, dadurch gekennzeichnet, daß das tertiäre Amin Triethylamin ist.

**Revendications**

1. Procédé de préparation de copolyphosphazènes contenant des motifs à distribution statistique représentés par les formules:

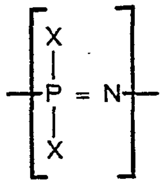 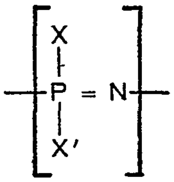 et 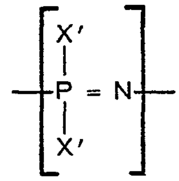

dans lesquelles X est un radical —$OZ(OR)_{m-1}$ dans lequel Z représente B+++, P+++, Si++++ ou Ti++++, *m* est la valence de Z et R est un radical alkyle ramifié, à chaîne droite ou cyclique contenant 1 à 12 atomes de carbone ou des mélanges de ces radicaux, et X' est choisi dans l'ensemble formé de groupes alkoxy, aryloxy, amino ou mercapto substitués et non substitués et leurs mélanges; caractérisé par la réaction d'un poly(dichlorophosphazène) de formule —$(NPCl_2)_n$- dans laquelle *n* a une valeur de 20 à 50 000, avec un mélange comprenant un composé de formule $Z(OR)_m$ dans laquelle Z, *m* et R ont les définitions données ci-dessus et un alcool aliphatique ou aromatique substitué ou non substitué, un composé aminé ou un composé mercapto en présence d'une amine tertiaire.

2. Procédé suivant la revendication 1, dans lequel le composé de formule $Z(OR)_m$ est un borate trialkylique représenté par la formule $B(OR)_3$.

3. Procédé suivant la revendication 1, dans lequel ledit mélange consiste en un borate trialkylique et un alcool aliphatique ou aromatique.

4. Procédé suivant la revendication 1, dans lequel ledit mélange consiste en borate de tris-2-éthylhexyle et en trifluoréthanol.

5. Procédé suivant la revendication 1, dans lequel ledit mélange est formé de borate de triméthyle et de trifluoréthanol.

6. Procédé suivant la revendication 1, dans lequel ledit mélange est formé de borate de tris-2-éthylhexyle et de p-chlorophénol.

7. Procédé suivant la revendication 1, dans lequel le composé $Z(OR)_m$ est un phosphite de trialkyle représenté par la formule $P(OR)_3$.

8. Procédé suivant la revendication 1, dans lequel ledit mélange est formé d'un phosphite de trialkyle et d'un alcool aliphatique ou aromatique.

9. Procédé suivant la revendication 8, dans lequel ledit mélange consiste en phosphite de triméthyle et en trifluoréthanol.

10. Procédé suivant la revendication 8, dans lequel ledit mélange est formé de phosphite de triméthyle et de p-chlorophénol.

11. Procédé suivant la revendication 1, dans lequel le composé $Z(OR)_m$ est un orthosilicate de tétraalkyle représenté par la formule $Si(OR)_4$.

12. Procédé suivant la revendication 1, dans lequel ledit mélange comprend un orthosilicate de tétraalkyle et un alcool aliphatique ou aromatique.

13. Procédé suivant la revendication 12, dans lequel ledit mélange consiste en orthosilicate de tétra-éthyle et en trifluoréthanol.

14. Procédé suivant la revendication 12, dans lequel ledit mélange consiste en orthosilicate de tétra-éthyle et en p-chlorophénol.

15. Procédé suivant la revendication 1, dans lequel le composé $Z(OR)_m$ est un titanate de tétraalkyle représenté par la formule $Ti(OR)_4$.

16. Procédé suivant la revendication 1, dans lequel ledit mélange est formé d'un titanate de tétraalkyle et d'un alcool aliphatique ou aromatique.

17. Procédé suivant la revendication 1, dans lequel ledit mélange consiste en titanate de tétrabutyle et en trifluoréthanol.

18. Procédé suivant la revendication 1, dans lequel ledit mélange consiste en titanate de tétrabutyle et en p-chlorophénol.

19. Procédé suivant la revendication 1, dans lequel ladite amine tertiaire est la triéthylamine.